# EUROPEAN PATENT APPLICATION

(11) **EP 4 765 342 A1**
(43) Date of publication of application: **24.06.2026**
(21) Application number: 25833329.3
(22) Date of filing: 30.06.2025
(51) Int. Cl.: H01M 10/6556, H01M 10/659, H01M 50/204, C09K 5/06

(54) **PACK STRUCTURE FILLED WITH PHASE CHANGE MATERIAL**

(30) Priority: 02.07.2024 KR 20240086621
(71) Applicant: LG Energy Solution, Ltd., Seoul 07335 (KR)
(72) Inventor: LEE, Sang Ouk, Daejeon 34122 (KR)
(74) Representative: BCKIP Part mbB
(86) International application number: PCT/KR2025/009175
(87) International publication number: WO 2026/010270

(57) **Abstract**

Disclosed herein relates to a pack structure comprising a plurality of hollow passages therein, the pack structure configured to make up at least part of a pack case, wherein at least a portion of the plurality of hollow passages is selectively filled with a phase change material that undergoes a phase transition from solid to liquid when exceeding a preset temperature.

## Description

### [Technical Field]

The present disclosure relates to a pack structure included in a pack case.

This application is based on and claims priority from Korean Patent Application No. 10-2024-0086621, filed on July 2, 2024, with the Korean Intellectual Property Office, the disclosure of which is incorporated herein in its entirety by reference.

### [Background]

Secondary batteries, unlike primary batteries, are rechargeable, and can come in a small size and a large capacity, and therefore, many researches and developments have been conducted on secondary batteries in recent years. As the technology development and demand for mobile devices increase, and electric vehicles and energy storage systems are gaining attention in response to the need for environment protection in current era, the demand for secondary batteries as an energy source is growing rapidly.

The secondary batteries are classified into coin-type, cylindrical, prismatic, and pouch-type batteries, according to the shape of a battery case. In the secondary batteries, an electrode assembly mounted in the battery case is a rechargeable power generation device with a stacked structure of electrodes and separators.

Since the secondary batteries are used continuously over an extended period of time, it is necessary to effectively control the heat generated during charging and discharging processes of the batteries. See, e.g., Korean Patent No. 10-2628603 issued on January 19, 2024.

### [Summary]

### [Technical Problem]

The present disclosure provides a pack structure that ensures a sufficient heat capacity to respond to a thermal runaway occurring in secondary batteries while maintaining the advantage of weight reduction.

Advantages of the present disclosure are not limited to those described above, and one of ordinary skill in the art of the present disclosure can clearly understand other advantages from the descriptions herein below.

### [Technical Solution]

The present disclosure relates to a pack structure that makes up at least part of a pack case and includes a plurality of hollow passages therein. At least a portion of the plurality of hollow passages is selectively filled with a phase change material that undergoes a phase transition from solid to liquid when exceeding a preset temperature.

A specific gravity of the phase change material may be smaller than a material of the pack structure.

In an embodiment, the pack structure may make up a base plate or a side plate of the pack case.

For example, the pack structure may be the base plate, and the base plate may be a heat sink in which a portion of the plurality of hollow passages is filled with the phase change material, and remaining hollow passages serve as cooling channels.

The hollow passages filled with the phase change material are divided into a plurality of groups by the cooling channels.

In another embodiment, the pack structure may be the side plate, and in the side plate, all of the plurality of hollow passages may be filled with the phase change material.

The pack structure including the hollow passages may be formed in an integrated piece through an extrusion molding, and each hollow passage filled with the phase change material may be maintained in a state of being open toward an outside at at least one end thereof.

A temperature that is set as a reference at which the phase change material undergoes the phase transition from solid to liquid may correspond to an upper limit of a temperature range in which a battery pack, including the pack case to which the pack structure is applied, is determined to operate normally.

For example, the upper limit of the temperature ranges in which the battery pack is determined to operate normally may be selected from a range of about 60 °C to 80 °C.

The phase change material may be a paraffin-based material.

For example, the phase change material may be at least one material selected from paraffin 140, paraffin 145, paraffin 150, paraffin 155, and paraffin 160.

Among the plurality of hollow passages, a number and locations of hollow passages filled with the phase change material and a number and locations of hollow passages serving as the cooling channels may be determined in consideration of design factors such as a cooling capacity, a heat capacity, and a weight.

### [Advantageous Effects]

According to the pack structure of the present disclosure with the configuration described above, at least a portion of the plurality of hollow passages formed in the pack structure is filled with the phase change material that undergoes the phase transition from solid to liquid, and the phase change material absorbs ambient heat as sensible heat and latent heat until reaching a phase transition temperature. Therefore, the entire heat capacity of the pack structure increases in proportion to the filling amount of phase change material.

Further, when the phase change material is selected to have a smaller specific gravity than the material of the pack structure, the heat capacity of the pack structure may be effectively increased while suppressing the increase in entire weight of the pack structure.

The technical effects achieved from the present disclosure are not limited to those described above, and other effects that are not described herein may clearly be understood to those skilled in the art from the descriptions in the claims.

### [Brief Description of the Drawings]

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.
FIG. 1 is a view illustrating a pack case to which a pack structure according to an embodiment of the present disclosure is applicable.
FIG. 2 is a view illustrating the cross section of a base plate applied to the pack case of FIG. 1.
FIG. 3 is an enlarged view of portion "A" of FIG. 1.
FIG. 4 is a view illustrating the cross section of a side plate applied to the pack case of FIG. 1.
FIG. 5 is a view illustrating an example where a phase change material is applied to the base plate of the pack case to which the pack structure of the present disclosure is applied.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [Best Mode for Carrying out the Invention]

Since the present disclosure may be subjected to various modifications and include various embodiments, particular embodiments of the present disclosure will be described in detail below.

The present disclosure is not limited to the particular embodiments, and should be construed as including all modifications, equivalents, or substitutions that fall within the technical idea and the technical scope of the present disclosure.

In the descriptions herein below, terms such as "include" and "have" are intended to designate the presence of features, numerals, steps, operations, components, parts, and combinations thereof described herein, but should not be interpreted to exclude the presence or possible addition of one or more other features, numerals, steps, operations, components, parts, and combinations thereof.

In the descriptions herein below, when an element such as a layer, film, region, or plate is present "on" a specific part, this description includes not only a case where the element is disposed "directly on" the specific part, but also a case where another part is present between the element and the specific part. Meanwhile, when an element such as a layer, film, region, or plate is present "under" a specific part, this description includes not only a case where the element is disposed "directly under" the specific part, but also a case where another part is present between the element and the specific part. As used herein, the description "disposed 'on'" may include not only a case of being disposed on an upper side, but also a case of being disposed on a lower side.

The secondary batteries are used for relatively long periods of time through repeated charging and discharging processes, and it is necessary to effectively control heat generated for various causes during the use. For example, when the cooling of the secondary batteries is not efficiently performed, the temperature rise causes an increase in current, and the increased current in turn further increases the temperature, creating a positive feedback chain reaction, which eventually leads to the catastrophic state of thermal runaway.

In order to effectively dissipate the heat generated in the secondary batteries, a heat sink in which a coolant flows (also called a cooling plate) is widely used. The heat sink makes up the bottom surface of a collection of multiple secondary batteries, such as a battery pack including multiple secondary batteries, or is mounted on the bottom surface to perform a cooling function that absorbs the heat generated in the battery pack by the coolant and discharges the heat to the outside.

The heat sink may be classified into a brazed heat sink and an extruded heat sink according to its structure and a manufacturing method thereof. The brazed heat sink has a structure in which two plate materials are attached together through a brazing to form flow paths, which provides a high degree of freedom in design of the flow path, but has a drawback of reduced structural rigidity due to a deterioration of physical properties of the materials. Meanwhile, the extruded heat sink is manufactured in the form of monolithic body through an extrusion molding, which may ensure a sufficient structural rigidity while achieving the weight reduction, and effectively form coolant flow paths by forming a plurality of hollow passages at once through the extrusion molding. However, since the extruded heat sink may form only straight flow paths, an appropriate design for providing ports may be necessary to implement the effective coolant flow.

As such, the extruded heat sink has many advantages including the weight reduction, but in the thermal runaway situation, the light weight of the heat sink limits the heat absorption capacity, which may make it difficult to control the thermal runaway situation through only the circulation of the coolant. In consideration of this problem, when a portion of the hollow passages in the heat sink is filled, the resistance to the thermal runaway may be enhanced, but the weight of the pack case significantly increases, which may cause another problem such as the loss of competitiveness.

The present disclosure relates to a pack structure that makes up at least part of a pack case and includes a plurality of hollow passages therein, and at least a portion of the plurality of hollow passages is filled with a phase change material that undergoes a phase transition from solid to liquid when exceeding a preset temperature.

Here, the phase change material may have a smaller specific gravity than the material of the pack structure.

According to the pack structure of the present disclosure having the configuration described above, at least a portion of the plurality of hollow passages formed in the pack structure is filled with the phase change material that undergoes the phase transition from solid to liquid, and the phase change material absorbs ambient heat as sensible heat and latent heat until reaching the phase transition temperature. Thus, the entire heat capacity of the pack structure increases in proportion to the filling amount of phase change material.

Further, when the phase change material is selected to have a smaller specific gravity than the material of the pack structure, the heat capacity may be effectively increased while suppressing the increase in entire weight of the pack structure.

### [Mode for Carrying out the Invention]

Hereinafter, embodiments of the present disclosure will be described in detail with reference to the accompanying drawings. Here, directions such as front and rear, up and down, and left and right to designate relative positions are intended to facilitate the understanding of the invention, and refer to the directions illustrated in the drawings unless otherwise defined.

### <First Embodiment>

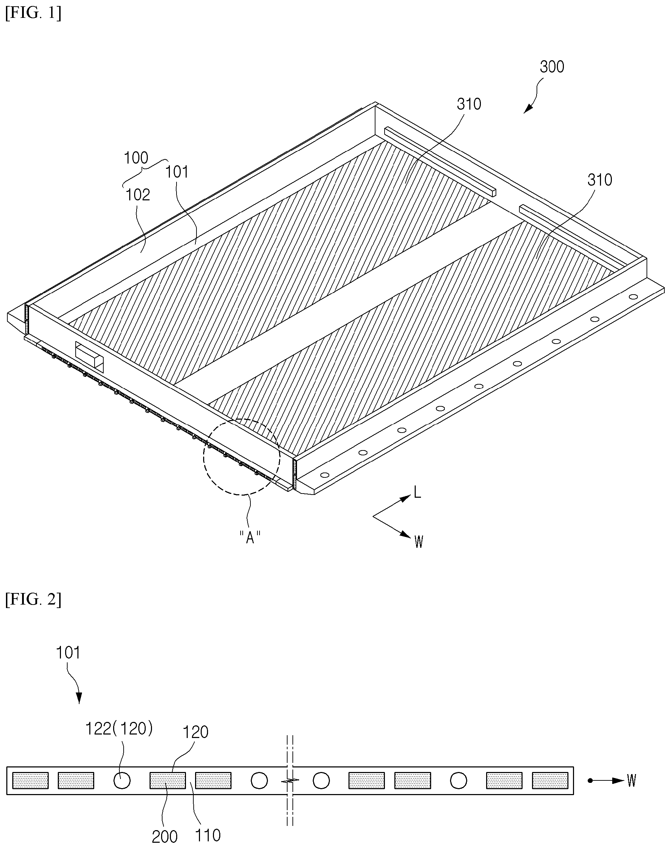

FIG. 1 is a view illustrating a pack case 300 to which a pack structure 100 according to an embodiment of the present disclosure may be applied. The pack case 300 includes a base plate 101 that makes up the bottom surface, and a plurality of side plates 102 that are walls surrounding all sides of the base plate 101. The space formed by the base plate 101 and the plurality of side plates 102 corresponds to a space for accommodating a plurality of battery cells. The plurality of battery cells may be mounted in the pack case 300 in a module form in which multiple battery cells are packaged in a separate case, or in a block form in which multiple battery cells are constrained by a plurality of frames.

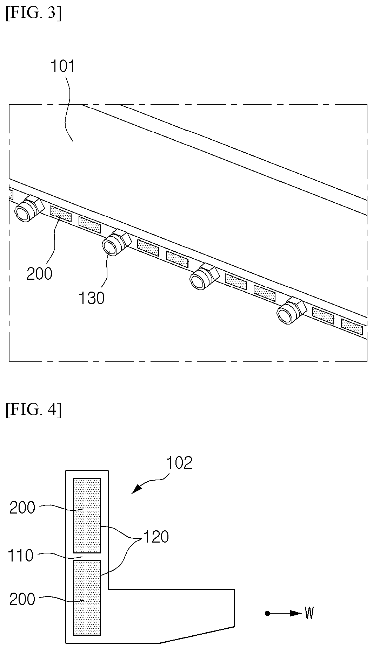

The base plate 101 and the side plates 102 may be collectively referred to as the pack structure 100 that makes up the frame structure of the pack case 300. FIG. 2 illustrates the cross section of the base plate 101 according to an embodiment of the present disclosure, and FIG. 4 illustrates the cross section of a side plate 102 according to an embodiment of the present disclosure.

The base plate 101 corresponds to the pack structure 100 making up the bottom surface of the pack case 300. The base plate 101 includes a plurality of hollow passages 120 formed between a plurality of ribs 110 arranged to be spaced apart from each other therein along the entire length direction L. For example, as illustrated, the base plate 101 may be manufactured through an extrusion molding. By the extrusion molding, the entire base plate 101 including the ribs 110 and the hollow passages 120 may be formed as an integrated piece. Here, the length direction L indicates the direction of the extrusion molding of the pack structure 100, i.e., the direction in which the plurality of hollow passages 120 extend, and the width direction W indicates the direction perpendicular to the length direction L on the plane in which the plurality of hollow passages 120 are arranged to be spaced apart from each other.

A heat sink may be disposed on the bottom surface of the pack case 300 to dissipate the heat generated in the battery cells during charging and discharging. The heat sink may be manufactured separately and coupled to the base plate 101, or the base plate 101 itself may be configured as the heat sink. In the illustrated embodiment, the base plate 101 is configured such that a portion of the plurality of hollow passages 120 functions as cooling channels 122, thereby serving as the heat sink.

Referring to FIGS. 2 and 3, ports 130 are coupled to a portion of the plurality of hollow passages 120 arranged to be spaced apart from each other along the width direction W. Each port 130 serves as a joint that connects a tube to each hollow passage 120, thereby acting as an inlet or outlet of a cooling fluid. The hollow passages 120 coupled to the ports 130 form the cooling channels 122. By the cooling channels 122 and the cooling fluid flowing therein, the rise in temperature of the battery cells mounted on the base plate 101 is suppressed. FIG. 2 omits the illustration of the tube provided to configure each port 130 as the inlet or outlet of the cooling fluid.

Referring to the base plate 101 illustrated, the ports 130 are coupled to only a portion of the plurality of hollow passages 120. For example, only a portion of the hollow passages 120 makes up the cooling channels 122. In prior art, the remaining hollow passages 120 are left as cavities to reduce the weight of the large base plate 101. However, as the weight of the base plate 101 is reduced, the overall heat capacity thereof decreases. When the heat capacity of the base plate 101 decreases, the capacity to absorb the heat generated in the battery cells and discharge the heat to the outside decreases. In this case, no significant problem may occur as long as the battery pack operates normally, but in a hazardous situation that may cause a thermal runaway, heat propagation, or ignition, the reduced capacity to absorb the heat of the battery cells may be disadvantageous in suppressing the temperature rise.

The present disclosure solves the problem of reduced heat capacity of the pack structure 100 including the plurality of hollow passages 120, and to this end, at least a portion of the plurality of hollow passages 120 is filled with a phase change material 200 that undergoes a phase transition from solid to liquid when exceeding a preset temperature. Further, the phase change material 200 may be selected to have a smaller specific gravity than the material of the pack structure 100 (e.g., an aluminum alloy and a stainless steel). FIG. 3 is an enlarged view of the portion "A" in FIG. 1, and illustrates a structure in which a portion of the hollow passages 120 is coupled to the ports 130 to make up the cooling channels 122, and the remaining hollow passages 120 are filled with the phase change material 200.

The phase change material 200 filled in the hollow passages 120 maintains the solid state at a specific temperature or lower. For example, the phase change material 200 remains in the solid state at room temperature or within a reference temperature range in which the battery pack may be determined to be in the normal operating state. The phase change material 200 in the solid state absorbs the ambient heat (sensible heat), and when reaching a specific temperature, undergoes the phase transition to liquid (latent heat). When exceeding the specific temperature, the phase change material 200 liquefies completely.

In this way, the phase change material 200 plays a role in absorbing the heat introduced into the pack structure 100, and absorbs a large amount of heat as latent heat during the phase transition occurring at the specific temperature. Therefore, by the phase change material 200 filled in the hollow passages 120 that remain as cavities in prior art, the heat capacity of the pack structure 100, e.g., the base plate 101 increases significantly.

Referring back to FIGS. 2 and 3, the hollow passages 120 filled with the phase change material 200 are divided into a plurality of groups by the cooling channels 122 coupled to the ports 130. For example, the number of hollow passages 120 making up the cooling channels 122 and the number of hollow passages 120 filled with the phase change material 200 may not match in a one-to-one manner, and may differ from each other. Further, while the drawings illustrate an example where the phase change material 200 is filled in all the hollow passages 120 that do not make up the cooling channels 122, a portion of such hollow passages 120 may be left as cavities that are not filled with the phase change material 200. In this way, in the base plate 101 that is the heat sink, for example, the number and locations of hollow passages 120 making up the cooling channels 122 and the number and locations of hollow passages 120 filled with the phase change material 200 may be appropriately determined in consideration of various design factors such as the cooling capacity, heat capacity, and weight.

FIG. 4 is a view illustrating another example of the pack structure 100, and illustrates the cross section of the side plate 102 applied to the pack case 300 of FIG. 1. The side plate 102 illustrated in FIG. 4 includes a plurality of hollow passages 120 divided by an inner rib 110 therein, and all of the plurality of hollow passages 120 are filled with the phase change material 200. For example, the illustrated side plate 102 does not include the cooling channels 122, and in this case, all the hollow passages 120 may be filled with the phase change material 200. This embodiment is merely an example, and when the cooling channels 122 are also formed in the side plate 102 to provide the cooling function, it is obvious that similar to the base plate 101 in FIGS. 2 and 3, a portion of the hollow passages 120 may make up the cooling channels 122, and another portion of the hollow passages 120 may be filled with the phase change material 200.

Referring back to FIG. 1, each hollow passage 120 filled with the phase change material 200 is maintained in the state of being open toward the outside at at least one end thereof. For example, the illustrated pack structure 100 may be manufactured, through the extrusion molding, to be open at both ends of the hollow passage 120 in the length direction L, and the phase change material 200 in the liquid state may be injected from one open end (the other end is temporarily sealed), and solidified. After filling the hollow passage 120 of the pack structure 100 with the phase change material 200, at least one end of the hollow passage 120 may be restored to or maintained in the open state. This is because the phase change material 200 is used to improve the heat capacity, and therefore, when the phase change material 200 remains after absorbing a large amount of heat in an event where the battery pack becomes abnormally overheated, the hot phase change material 200 may instead result in an adverse effect of accelerating the overheating of the battery pack. Thus, the phase change material 200 liquefied after absorbing the large amount of heat may be removed by being discharged smoothly from the pack structure 100 to the outside through the open end. Further, the phase change material 200 expands in volume as it liquefies, and accordingly, when the phase change material 200 remains in the liquid state for an extended period of time, the expanded phase change material 200 may apply a continuous pressure to the sealed hollow passages 120, consequently, adversely affecting the durability of the pack structure 100. In an embodiment of the present disclosure, the hollow passages 120 filled with the phase change material 200 may be configured to be maintained in the state of being open toward the outside, such that the liquefied phase change material 200 may be discharged smoothly to the outside. For example, when an abnormal heat is generated in the battery pack including the battery cells in the state where the battery pack is mounted in the pack structure 100, the phase change material 200 filled in the pack structure 100 may absorb the generated heat, and when exceeding the specific phase transition temperature, liquefy and be discharged to the outside. In another embodiment of the present disclosure, the phase change material 200 may be filled in not only the pack structure 100, but also the battery cells and/or the battery pack mounted on the pack structure 100, to further increase the heat capacity.

Meanwhile, the temperature that is set as a reference at which the phase change material 200 undergoes the phase transition from solid to liquid may correspond to a temperature upper limit that alerts the hazardous situation causing a thermal runaway, heat propagation, or ignition of the battery cells, within a temperature range in which the battery pack, including the pack case 300 to which the pack structure 100 of the present disclosure is applied, is determined to operate normally. For example, the temperature ranges in which the battery pack is determined to operate normally may be set to about -40 °C to 60 °C. In this case, the phase change material 200 may have the physical property to undergo the phase transition from solid to liquid, only when exceeding 60 °C, which is the upper limit of the normal temperature range. In other words, the phase change material 200 stably maintains the solid state in the normal temperature range, and may undergo the phase transition only when reaching a specific temperature exceeding the temperature upper limit. In this way, the liquefaction temperature of the phase change material 200 is set, so that the phase change material 200 may liquefy and be discharged in an emergency situation where an abnormally high temperature occurs in the battery pack.

The upper limit of the normal temperature range set for the battery pack may be appropriately selected. For example, the temperature upper limit may be set to a specific temperature in the range of about 60 °C to 80 °C, and the corresponding phase change material 200 may be a paraffin-based material. For example, the phase change material 200 suitable for this condition may be at least one material selected from paraffin 140, paraffin 145, paraffin 150, paraffin 155, and paraffin 160. The numerals 140 to 160 that discriminate the paraffin-based materials indicate a temperature in degrees Fahrenheit, and since the paraffin-based materials of paraffin 140 to paraffin 160 liquefy at a temperature between about 60 °C and 71 °C, they may be suitably applied to the pack structure 100 in which the temperature upper limit is selected in the range of 60 °C to 80 °C.

"RT100HC," manufactured by the company "Rubitherm Technologies GmbH" in Berlin, Germany, is the phase change material 200 with a liquefaction point between about 99 °C and 101 °C and a high heat capacity of about 180+7.5 % (kJ/kg). By applying "RT100HC" to the pack structure 100 of the present disclosure, the phase change material 200 may continuously absorb the heat of the battery cells over a significantly extended period of time. However, since the liquefaction point of "RT100HC" is about 30 °C to 40 °C higher than the paraffin-based materials described above, it may be necessary to increase the cooling capacity of the battery pack as well.

### <Second Embodiment>

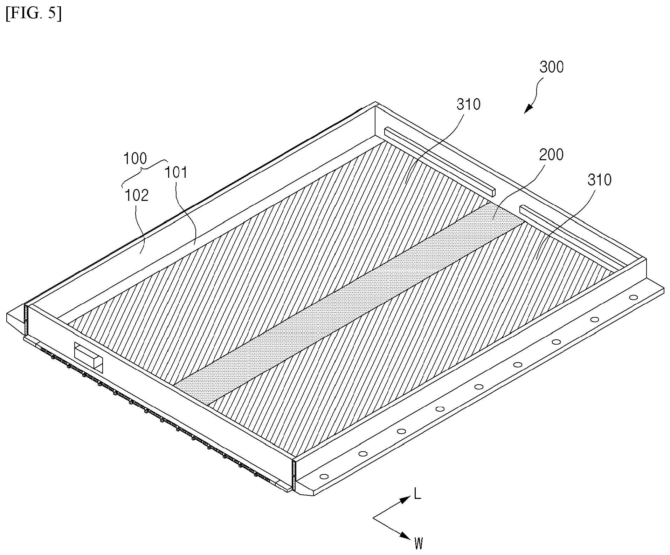

FIG. 5 is a view illustrating an example where the phase change material 200 is applied onto the base plate 101 of the pack case 300 to which the pack structure 100 of the present disclosure is applied.

As described above in the first embodiment, the pack structure 100 of the present disclosure includes the plurality of hollow passages 120 therein, and at least a portion of the hollow passages 120 is filled with the phase change material 200 that undergoes the phase transition from solid to liquid when exceeding a specific temperature. The embodiment of FIG. 5 represents the pack case 300 in which the base plate 101 and/or the side plates 102 are applied as the pack structure 100 of the present disclosure, and the phase change material 200 is not only filled in the pack structure 100, but also applied to a specific region on the base plate 101.

In the illustrated pack case 300, the plurality of battery cells are grouped and mounted in the form of modules or blocks on the base plate 101, and the heat of the battery cells is transferred to the base plate 101 through thermal conduction. According to an embodiment, in order to improve the conduction of the heat of the battery cells and enhance the close contact and fixation of the battery modules or blocks, a thermal resin 310 is applied to the mounting region.

Since the thermal resin 310 is an expensive material, its application amount needs to be appropriately controlled to avoid an excessive application. Further, an insulation treatment is required in the regions where the thermal resin 310 is not applied, and thus, for example, a step of attaching a PET film is necessary. In consideration of these points, the phase change material 200 described in the first embodiment may be applied to the empty regions between the regions of the thermal resin 310. The phase change material 200 applied onto the base plate 101 contributes to increasing the heat capacity of the base plate 101, and the insulation treatment may easily be performed as compared to the step of attaching the film.

The present disclosure has been described in detail with reference to the drawings and the embodiments. However, it can be appreciated that the configurations described in the drawings and the embodiments herein are merely examples of the present disclosure, which do not exhaustively represent the technical idea of the present disclosure, and various equivalents and modifications may be made to substitute the present disclosure at the time of filing the present disclosure.

## Claims

1. A pack structure comprising:
a plurality of hollow passages therein, the pack structure configured to make up at least part of a pack case,
wherein at least a portion of the plurality of hollow passages is selectively filled with a phase change material that undergoes a phase transition from solid to liquid when exceeding a preset temperature.

2. The pack structure according to claim 1, wherein a specific gravity of the phase change material is smaller than a material of the pack structure.

3. The pack structure according to claim 1, wherein the pack structure makes up a base plate or a side plate of the pack case.

4. The pack structure according to claim 3, wherein the pack structure is the base plate, and
the base plate is a heat sink in which a portion of the plurality of hollow passages is filled with the phase change material, and remaining hollow passages serve as cooling channels.

5. The pack structure according to claim 4, wherein hollow passages filled with the phase change material are divided into a plurality of groups by the cooling channels.

6. The pack structure according to claim 4, wherein the pack structure is the side plate, and
in the side plate, all of the plurality of hollow passages are filled with the phase change material.

7. The pack structure according to claim 1, wherein the pack structure including the hollow passages are formed in an integrated piece through an extrusion molding, and
each hollow passage filled with the phase change material is maintained in a state of being open toward an outside at at least one end thereof.

8. The pack structure according to claim 1, wherein a temperature that is set as a reference at which the phase change material undergoes the phase transition from solid to liquid corresponds to an upper limit of a temperature range in which a battery pack, including the pack case to which the pack structure is applied, is determined to operate normally.

9. The pack structure according to claim 8, wherein the upper limit of the temperature ranges in which the battery pack is determined to operate normally is selected from a range of about 60 °C to 80 °C.

10. The pack structure according to claim 9, wherein the phase change material is a paraffin-based material.

11. The pack structure according to claim 10, wherein the phase change material is at least one material selected from paraffin 140, paraffin 145, paraffin 150, paraffin 155, and paraffin 160.

12. The pack structure according to claim 4, wherein among the plurality of hollow passages, a number and locations of hollow passages filled with the phase change material and a number and locations of hollow passages serving as the cooling channels are determined in consideration of design factors such as a cooling capacity, a heat capacity, and a weight.
